Europäisches Patentamt

(19) European Patent Office

Office européen des brevets

(11) Numéro de publication : **0 296 108 B1**

# (12) FASCICULE DE BREVET EUROPEEN

(45) Date de publication du fascicule du brevet :
04.09.91 Bulletin 91/36

(51) Int. Cl.⁵ : **B29C 45/14, B44C 3/04**

(21) Numéro de dépôt : **88810374.4**

(22) Date de dépôt : **07.06.88**

(54) **Procédé de fabrication d'un objet en une matière thermoplastique comportant un motif décoratif.**

(30) Priorité : **12.06.87 FR 8708261**

(43) Date de publication de la demande :
**21.12.88 Bulletin 88/51**

(45) Mention de la délivrance du brevet :
**04.09.91 Bulletin 91/36**

(84) Etats contractants désignés :
**AT CH DE FR GB IT LI**

(56) Documents cités :
DE-A- 2 011 954
DE-A- 2 017 442
FR-A- 2 150 209
FR-A- 2 318 028
US-A- 2 811 744
US-A- 3 985 602

(56) Documents cités :
PATENT ABSTRACTS OF JAPAN, vol. 10, no.
207 (M-500)[2263], 19 juillet 1986; & JP-A-61 47
225 (HOKOKU JUSHI KOGYO K.K.) 07-03-1986
PATENT ABSTRACTS OF JAPAN, vol. 10, no.
207 (M-500)[2263], 19 juillet 1986; & JP-A-61 47
224 (HOKOKU JUSHI KOGYO K.K.) 07-03-1986

(73) Titulaire : ETA SA Fabriques d'Ebauches
Schild-Rust-Strasse 17
CH-2540 Granges (CH)

(72) Inventeur : Willemin, Albert
Rue des Flamands 41
CH-2525 Le Landeron (CH)

(74) Mandataire : de Montmollin, Henri et al
ICB Ingénieurs Conseils en Brevets SA
Passage Max Meuron 6
CH-2001 Neuchâtel (CH)

## Description

La présente invention concerne un procédé de fabrication d'un objet en une matière thermoplastique comportant un motif décoratif, ledit procédé comprenant l'impression dudit motif sur une face d'un support à l'aide d'une encre transférable susceptible de se séparer dudit support en réponse à un échauffement, l'introduction dudit support, après ladite impression, dans un moule ayant la forme et les dimensions dudit objet, et l'injection, après ladite introduction, de ladite matière thermoplastique dans ledit moule, ladite introduction dudit support étant réalisée de manière que, au moins pendant ladite injection, ledit support soit appliqué contre une paroi dudit moule avec ladite face tournée du côté de l'intérieur dudit moule, et ladite injection étant réalisée alors que ladite matière thermoplastique est à une température égale ou supérieure à sa température de fusion.

Il existe un très grand nombre d'objets en une matière thermoplastique qui sont munis d'un motif décoratif, et il n'est pas possible de les énumérer ici.

Ces objets sont très souvent fabriqués par injection d'une matière thermoplastique adéquate dans un moule, le motif décoratif étant reporté sur la surface extérieure de l'objet, à l'endroit voulu, par n'importe laquelle des techniques d'impression bien connues telles que la sérigraphie ou la tampographie.

Les objets ainsi fabriqués ont l'inconvénient que, s'ils sont soumis à un frottement pendant leur emploi, le motif décoratif qu'ils portent est facilement rayé, voire même effacé.

Le brevet US-A-2811744 décrit un procédé qui évite cet inconvénient. Selon ce procédé le matériau thermoplastique est injecté directement sur un morceau de papier portant le motif décoratif imprimé à l'aide d'une encre transférable, c'est-à-dire susceptible de se séparer du papier en réponse à un échauffement, ce papier ayant été préalablement disposé à l'endroit voulu dans le moule d'injection.

Pendant l'injection, l'encre transférable se sépare du papier et adhère au matériau thermoplastique et, après refroidissement de ce dernier, le motif est disposé à la surface de l'objet.

Cependant, avec ce procédé, il existe un grand risque que le motif décoratif soit déformé, ou même complètement brouillé, par le fait que la matière thermoplastique en fusion se déplace contre le papier pendant son injection.

En outre, ce procédé ne convient pas bien pour la fabrication d'objets en une matière thermoplastique qui est souple à sa température d'utilisation normale, car l'encre utilisée pour réaliser le motif décoratif diffuse assez facilement dans une telle matière. Le motif décoratif perd donc assez rapidement sa netteté, ce qui n'est évidemment pas souhaitable.

D'autre part, si ce procédé est utilisé pour la fabrication d'objets en une matière thermoplastique qui est dure à sa température d'utilisation normale, l'encre formant le motif décoratif ne diffuse pas dans cette matière et, s'il ne risque pas d'être déformé par cette diffusion, le motif décoratif risque par contre d'être abîmé, voire même complètement effacé, par les frottements que subit éventuellement l'objet. Il est donc nécessaire, dans un tel cas, de protéger le motif décoratif en le recouvrant d'une couche transparente de laque ou de matière plastique après avoir sorti l'objet du moule d'injection, comme cela est décrit dans le brevet US-A-2811744 déjà mentionné. Le dépôt de cette couche de protection représente une opération supplémentaire qui complique et renchérit le procédé.

Un but de la présente invention est de proposer un procédé de fabrication d'un objet en une matière thermoplastique injectée grâce auquel le motif décoratif n'est en aucun cas déformé par le déplacement de cette matière thermoplastique dans le moule d'injection.

Un autre but de la présente invention est de proposer un tel procédé grâce auquel le risque de voir le motif décoratif perdre sa netteté au bout d'un certain temps par suite de la diffusion de l'encre qui le forme dans la matière thermoplastique de l'objet si cette dernière est souple, et le risque de voir ce motif décoratif abîmé ou même détruit par les frottements éventuellement subis par l'objet si la matière de ce dernier est dure peuvent être évités si nécessaire.

Ces buts sont atteints par le procédé revendiqué.

Comme le procédé décrit dans le brevet US-A-2811744 déjà mentionné, le procédé selon l'invention comporte l'impression du motif destiné à décorer l'objet sur une face d'un support adéquat constitué d'une feuille de papier ou de matière plastique à l'aide d'une encre transférable. Cette impression, de même que les supports et les encres utilisables pour la réaliser, sont bien connus et ne seront pas décrits plus en détail ici.

De préférence, cette feuille de support a des dimensions nettement supérieures à celles de la partie de l'objet qui doit être décorée, et plusieurs motifs décoratifs sont imprimés les uns à côté des autres sur cette feuille. Cette dernière est ensuite découpée en morceaux portant chacun un seul motif décoratif et ayant chacun des dimensions adaptées à celles de la partie de l'objet qui doit être décorée.

Un de ces morceaux de la feuille de support est ensuite introduit dans un moule à injection classique dont les parois définissent, lorsqu'il est fermé, une cavité ayant la forme et les dimensions de l'objet à fabriquer.

Ce morceau de feuille de support est bien entendu introduit dans ce moule alors que ce dernier est ouvert. Il est disposé dans ce moule de manière que, pendant l'injection de la matière thermoplastique de l'objet qui sera réalisée dans une étape ultérieure du procédé, il soit appliqué par la pression de cette matière contre la paroi du moule et que le motif décoratif se trouve à l'endroit qu'il devra occuper sur l'objet terminé. En outre, ce morceau de feuille de support est introduit de manière que sa face portant le motif décoratif soit tournée, pendant l'injection de la matière thermoplastique de l'objet, du côté de l'intérieur du moule.

Toujours alors que le moule est ouvert, un film en une matière dont la nature sera précisée plus loin est ensuite introduit dans ce moule, de manière que, pendant l'injection de la matière thermoplastique de l'objet, qui sera réalisée ensuite, il soit appliqué par la pression de cette dernière contre la face du morceau de feuille de support portant le motif décoratif.

Le moule à injection est ensuite fermé, et la matière thermoplastique de l'objet y est injectée de manière classique et qui ne sera pas décrite en détail ici.

Pendant cette injection, la matière thermoplastique de l'objet, qui est évidemment à une température égale ou supérieure à sa température de fusion, chauffe le film et, à travers celui-ci, l'encre formant le motif décoratif portée par le morceau de feuille de support.

En réponse à cet échauffement, cette encre se détache de son support et se dépose sur le film ou même, selon les cas, pénètre dans ce film d'une manière qui sera décrite plus loin.

On voit que dans le présent procédé, contrairement à ce qui se passe dans le procédé décrit par le brevet US-A-2811744 déjà mentionné, l'encre formant le motif décoratif n'est pas en contact direct avec la matière thermoplastique en fusion qui se déplace dans le moule pendant son injection. Cette encre ne risque donc pas d'être entraînée par ce déplacement.

Comme de plus le film et le support de l'encre sont immobiles l'un par rapport à l'autre, le motif décoratif est transféré sur le film sans aucune déformation.

Après l'injection mentionnée ci-dessus, le moule est évidemment ouvert et l'objet terminé est sorti de celui-ci.

La matière thermoplastique destinée à être injectée dans le moule est évidemment choisie en fonction des qualités physiques et chimiques que doit avoir l'objet, et le choix de cette matière détermine évidemment la température à laquelle elle est injectée dans le moule.

Ce choix détermine également, dans une certaine mesure, le choix de la matière du film.

Cette dernière matière doit en effet être choisie de manière qu'elle puisse se lier fortement à la matière injectée dans le moule, pour que le film portant le motif décoratif ne se détache pas de l'objet, même longtemps après la fabrication de celui-ci.

Cette liaison peut avantageusement être obtenue en choisissant la matière du film de manière que ses molécules soient capables de se lier chimiquement à celles de la matière injectée pendant que cette dernière est à sa température d'injection.

Cette liaison peut également être obtenue en choisissant la matière du film de manière qu'un phénomène d'interdiffusion macromoléculaire puisse se produire entre cette matière et celle qui est injectée dans le moule. Ce phénomène d'interdiffusion macromoléculaire est bien connu des spécialistes et ne sera pas décrit ici.

Il n'est évidemment pas possible d'énumérer ici toutes les matières thermoplastiques qui peuvent être injectées dans un moule avec, pour chacune, toutes les matières qui peuvent se lier à celle-ci et qui peuvent donc être choisies pour le film. Cette énumération n'est d'ailleurs pas nécessaire, car toutes ces matières et leurs propriétées sont bien connues des spécialistes.

On peut simplement mentionner que la déposante a obtenu d'excellents résultats en utilisant comme matière injectée un polyéther-bloc-amide comprenant environ 50% de polyéther et 50% d'amide et pour le film un autre polyéther-bloc-amide comprenant environ 30% de polyéther et 70% d'amide, ou un polyamide.

Il faut encore noter que la matière du film doit en outre être choisie de manière que l'encre formant le motif décoratif puisse se fixer fermement à ce film mais que, par contre, le support sur lequel ce motif est primitivement imprimé ne colle pas à ce film et puisse être facilement enlevé lorsque l'objet est sorti du moule après l'opération d'injection.

Il n'est à nouveau pas possible ni nécessaire d'énumérer ici, pour chaque type d'encre et/ou de support, toutes les matières qui remplissent ces dernières conditions et qui peuvent donc être choisies pour le film.

On peut simplement relever que de très bons résultats ont été obtenus dans des cas où l'encre formant le motif décoratif est une encre sublimable et où la matière du film est une matière thermoplastique.

Dans de tels cas, l'encre se vaporise lorsqu'elle est chauffée, à travers le film, par la matière thermoplastique pendant l'injection de cette dernière.

Le film lui-même étant également chauffé, cette encre vaporisée diffuse assez rapidement dans la matière de ce film.

Mais dès la fin de l'opération d'injection, la température du film diminue, et cette diffusion de l'encre s'arrête ou au moins se ralentit très fortement.

Pratiquement, cette diffusion rapide ne dure que quelques secondes. Pendant cette faible durée, elle se produit uniquement dans une direction perpendiculaire à la surface du film, et sur une profondeur, depuis cette surface, qui n'excède pas quelques dizaines de micromètres.

Le motif décoratif formé par cette encre après cette diffusion est donc identique, à un retournement de 180° près, à celui qui avait été imprimé sur le papier, et il est parfaitement visible même si la matière du film n'est pas complètement transparente.

En outre, malgré la faible profondeur de diffusion de l'encre formant le motif, celui-ci est parfaitement protégé contre tout dégat causé par un éventuel frottement sur l'objet terminé.

Il faut relever que la diffusion d'une encre sublimable dans une matière thermoplastique ne s'arrête jamais complètement, mais qu'elle continue à une vitesse très faible qui dépend de la nature de cette matière et de sa température.

Si le motif décoratif est volontairement assez flou, et/ou si la durée de vie qui est prévue pour l'objet est relativement courte, cette lente diffusion de l'encre dans la matière du film peut être négligée.

Si par contre le motif décoratif comporte des surfaces ou des lignes bien marqués, et /ou si la durée de vie de l'objet doit être assez longue, il faut éviter autant que possible cette lente diffusion.

La déposante a trouvé que, pour cela, il faut choisir pour le film une matière thermoplastique ayant une dureté d'autant plus grande que la vitesse de cette diffusion doit être lente. Pratiquement, si l'on choisit pour le film une matière thermoplastique ayant une dureté supérieure à 50 Shore-D, la vitesse de cette diffusion devient si lente que, même que si un objet fabriqué selon le présent procédé est parfois soumis à une température de 50 à 60°C, l'effet de cette diffusion sur le motif décoratif est encore imperceptible deux ou trois ans après la fabrication de cet objet.

Il faut noter que si l'objet fabriqué à l'aide du présent procédé n'est pas destiné à être déformé, c'est-à-dire si la matière thermoplastique injectée est dure à la température normale d'emploi de l'objet, l'épaisseur du film portant le motif décoratif peut être choisie très librement.

Par contre, si cet objet doit pouvoir être facilement déformé, c'est-à-dire si la matière thermoplastique injectée est souple à la température normale d'emploi de l'objet, l'épaisseur du film doit être choisie aussi faible que possible, de manière à ne pas empêcher la déformation de l'objet. Cette condition est cependant généralement très facile à satisfaire.

## Revendications

1. Procédé de fabrication d'un objet en une matière thermoplastique comportant un motif décoratif, ledit procédé comprenant l'impression dudit motif sur une face d'un support à l'aide d'une encre transférable susceptible de se séparer dudit support en réponse à un échauffement, l'introduction dudit support, après ladite impression, dans un moule ayant la forme et les dimensions dudit objet, et l'injection, après ladite introduction, de ladite matière thermoplastique dans ledit moule, ladite introduction dudit support étant réalisée de manière que, au moins pendant ladite injection, ledit support soit appliqué contre une paroi dudit moule avec ladite face tournée du côté de l'intérieur dudit moule, et ladite injection étant réalisée alors que ladite matière thermoplastique est à une température égale ou supérieure à sa température de fusion, caractérisé par le fait qu'il comprend en outre, avant ladite injection, l'introduction dans ledit moule d'un film de manière que, au moins pendant ladite injection, ledit film soit appliqué contre ladite face dudit support, ledit film étant en une matière susceptible de se lier à ladite matière thermoplastique pendant que cette dernière est à la température qu'elle a pendant ladite injection et susceptible de retenir ladite encre transférable lorsque celle-ci se sépare dudit support en réponse à son échauffement par ladite matière thermoplastique, à travers ledit film, pendant ladite injection.

2. Procédé selon la revendication 1, caractérisé par le fait que ladite encre est une encre sublimable susceptible de se vaporiser en réponse audit échauffement, et que ledit film est en une matière thermoplastique.

3. Procédé selon la revendication 2, caractérisé par le fait que ladite matière thermoplastique dudit film a une dureté égale ou supérieure à 50 Shore-D.

## Patentansprüche

1. Verfahren zur Herstellung eines Gegenstandes aus thermoplastischem Werkstoff, der ein dekoratives Muster trägt, wobei das erwähnte Verfahren umfasst, das Aufdrucken des erwähnten Musters auf eine Seite eines Trägers, mit Hilfe einer Transfer-Tinte, die sich vom erwähnten Träger unter Wärmeeinwirkung trennen kann, nach dem Bedrucken das Einführen des erwähnten Trägers in eine Form, welche die Gestalt und die Abmessungen des erwähnten Gegenstandes hat, und nach dem erwähnten Einführen das Einspritzen des thermoplastischen Werkstoffes in die erwähnte Form, wobei das erwähnte Einführen des erwähnten Trägers so ausgeführt wird, dass der erwähnte Träger mit der erwähnten Seite gegen das Innere der erwähnten Form zugekehrt, gegen eine Wand der erwähnten Form gedrückt wird, und das erwähnte Einspritzen ausgeführt wird, wenn der erwähnte thermoplastische Werkstoff eine Temperatur gleich oder über seiner Schmelztemperatur hat, dadurch gekennzeichnet, dass es weiters umfasst vor dem erwähnten Einspritzen das Einführen eines Films in die erwähnte Form, derart, dass der erwähnte Film wenigstens während des erwähnten Einspritzens gegen die erwähnte Seite des erwähnten Trägers gedrückt wird, wobei der erwähnte Film aus einem Werkstoff besteht, der sich mit dem erwähnten thermoplastischen Werkstoff verbinden kann, während letzterer auf der Temperatur ist, die er während des erwähnten Einspritzens hat, und der die Transfer-Tinte festhalten kann, wenn sich diese vom erwähnten Träger während des erwähnten Einspritzens auf Grund seiner Erwärmung bei dem thermoplastischen Werkstoff durch den erwähnten Film löst.

2. Verfahren nach Anspruch 1, dadurch gekennzeichnet, dass die erwähnte Tinte eine sublimierbare Tinte ist, die auf Grund der Erwärmung verdampft, und dass der Film aus einem thermoplastischen Werkstoff besteht.

3. Verfahren nach Anspruch 2, dadurch gekennzeichnet, dass der erwähnte thermoplastische Werkstoff des erwähnten Films eine Shore-D-Härte gleich oder über 50 hat.

# Claims

1. Method of manufacturing an object of thermoplastics material having a decorative design, said method comprising printing said design onto a face of a support using a transferable ink able to separate from said support in response to heating, introducing said support, after said printing, into a mould having the shape and dimensions of said object, and injecting, after said introduction, said thermoplastics material into said mould, said introduction of said support being carried out so that, at least during said injection, said support is applied against a wall of said mould with said face turned facing the inside of the mould, and said injection being carried out while said thermoplastics material is at a temperature equal or greater than its melting point, characterized by the fact that it further comprises, before said injection, introducing into said mould a film in such a manner that, at least during said injection, said film is applied against said face of said support, said film being of a material able to bond itself to said thermoplastics material while the latter is at the temperature it has during said injection and able to retain said transferable ink when said ink separates from said support in response to its being heated by said thermoplastics material, through said film, during said injection.

2. Method according to claim 1, characterized by the fact that said ink is a sublimable ink able to vaporize in response to said heating, and that said film is of thermoplastics material.

3. Method according to claim 2, characterized by the fact that said thermoplastics material of said film has a Shore-D hardness greater than or equal to 50.